# EUROPEAN PATENT APPLICATION

(11) **EP 1 993 046 A1**
(43) Date of publication of application: **19.11.2008**
(21) Application number: 07252065.3
(22) Date of filing: 18.05.2007
(51) Int. Cl.: G06F 17/30

(54) **Method and system for implementing two-phased searching**

(71) Applicant: United Technologies Corporation, Hartford, CT 06101 (US)
(72) Inventor: Markanthony, Joseph, Wallingford, CT 06492 (US); Karsten, Colin, Avon, CT 06001 (US)
(74) Representative: Tomlinson, Kerry John

(57) **Abstract**

A two-phased search of electronic content stored within a computer system or network is performed by recognizing patterns within the search terms provided by a user in a first phase (14). Based on recognized patterns within the search terms, specific sub-collections are selected (20) for searching. The selected sub-collections are searched (22) in the second phase using the search terms provided by the user.

## Description

The present invention is related to a method and system for optimizing search results of electronic collections. In particular, the present invention provides a method that employs a two-phased search process.

A typical search engine provides a tool that allows users to search large collections of electronic content for relevant material. A search engine is a computer application that "crawls" and "indexes" content making up the collection. Crawling is a process by which the search engine locates and views all content within the collection. Indexing is a process by which the search engine organizes content crawled or viewed. The search engine uses the search terms provided by a user to locate relevant content. Proper indexing of content allows the search engine to locate content in a timely fashion.

However, as the number of documents included within a collection increases, the task of searching and returning relevant content becomes more difficult. Oftentimes, a search engine will locate thousands of documents deemed relevant to a particular search term. This requires a user to sort through a large amount of irrelevant content to locate the desired content.

Therefore, it would be beneficial to provide an improved search system that optimizes search results.

The present invention is a method and system for providing a two-phased search system. In the first phase, a search term is analyzed to determine whether the search term or phrase matches a defined pattern. If the search term matches a defined pattern, a sub-collection associated with the matched pattern is searched in the second phase.

Certain embodiments of the invention will now be described by way of example only with reference to the accompanying drawings, in which:
FIG. 1 is a flowchart illustrating a two-phase search method of the present invention.
FIG: 2 is a flowchart illustrating a hierarchical taxonomy in which the two-phased search system of the present invention may be implemented.
FIG. 3 is a flowchart illustrating two-phased searching of the hierarchical taxonomy shown in FIG. 2.
FIG. 4 is a functional block diagram of a system for implementing two-phased searching.

Two-phased searching provides a method of optimizing search results. The first phase analyzes search terms to detect defined patterns. Based on the pattern matched, one or more sub-collections associated with the pattern are searched using the search terms in the second phase. By selecting a particular sub-collection to search in the first phase, the two-phased search method provides focused and relevant search results.

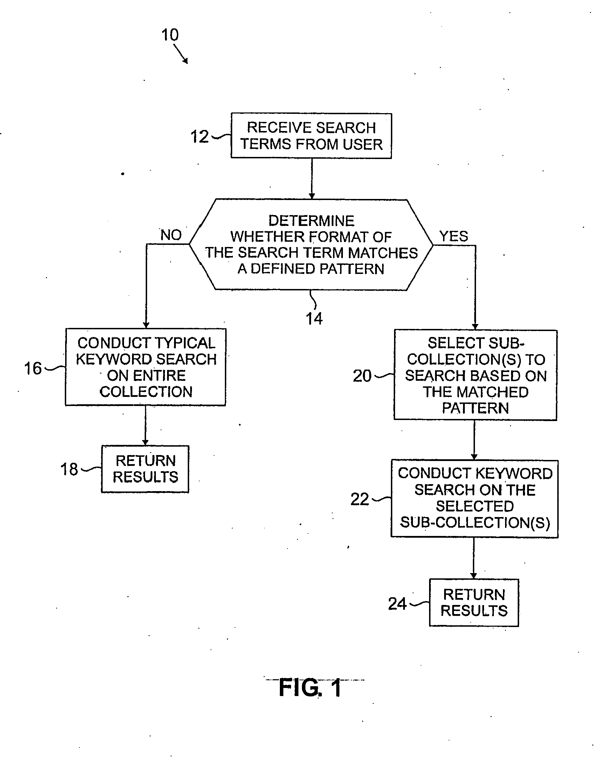

FIG. 1 is a flow chart of method 10, which illustrates steps in conducting a two-phased search. At step 12, a user provides search terms to a two-phased search system. At step 14, the search terms are analyzed to determine whether words or phrases included in the search terms match a defined pattern. In one embodiment, "regular expressions" are used to determine whether the search terms match any defined patterns. A regular expression is an expression that describes a set of strings. They are usually used to give a concise description of a set, without having to list all elements. For example, if all part numbers consist of two numbers, followed by a dash and three more numbers, followed by a dash and two more numbers (e.g., 12-345-67), then a regular expression may be defined to identify this pattern of numbers and dashes (i.e., ##(dash)###(dash)##). Thus, if a user enters a search term that includes the following search term, "45-251-555", the regular expression defined above recognizes this term as being of the same format as a part number.

Any number of regular expressions may be defined in order to identify a variety of patterns. Regular expressions are well-known in the field of computer programming, and may be implemented using a number of software applications. Depending on the application, the syntax used to define a regular expression may vary.

If the search term does not match a defined pattern, then at step 16 a typical search is performed on the entire collection. A typical search includes searching the entire collection based on the search terms provided, wherein a relevancy algorithm is used to determine which materials within the collection are most relevant to the search terms. At step 18, the results of the search conducted on the entire collection are returned. The results returned at step 18 are representative of the results returned by a typical single phase search engine.

If the search term does match a defined pattern, then at step 20 one or more sub-collections are selected to be searched based on the matched pattern. In one embodiment, selecting sub-collections to search is done by providing a user with a list of sub-collections associated with a particular matched pattern. The user selects from the list of associated sub-collections the particular sub-collections the user wishes to search. The user may select one or more sub-collection to search, or may elect to search the entire collection. In another embodiment, selecting sub-collections is done automatically, with sub-collections associated with a particular matched pattern being searched without input from a user.

At step 22, a relevancy search is conducted on the selected sub-collections, whether selected by a user or selected automatically. The relevancy search employs a relevancy algorithm to locate content within the selected sub-collections that are relevant to the search terms provided. At step 24, the results of the relevancy search are provided to the user. Because the results returned at step 24 only include content located within the selected sub-collections, the results are more focused than those provided in step 18 (which include content from the entire collection).

The results returned at step 18 or 24 may be ranked based on the relevancy of the content to the search terms provided by the user.

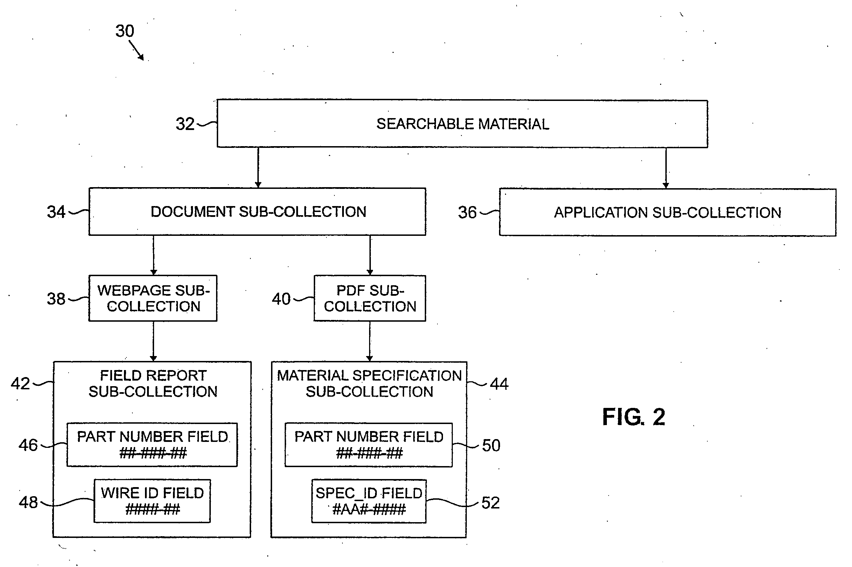

FIG. 2 illustrates a hierarchical class structure or taxonomy 30 that represents an exemplary embodiment of indexing organization employed in two-phased searching. A hierarchical taxonomy, such as the one shown in FIG. 2, is generated during the crawling and indexing process by a search engine application. A typical search engine will crawl or view all content within a collection. Indexing is the process by which the search engine application categorizes or organizes a collection such that the search engine can quickly retrieve specific content in response to a search request. In the embodiment shown in FIG. 2, content indexed by the two-phased search engine is organized in a hierarchical taxonomy, such that similar documents are indexed together in sub-collections.

As shown in FIG. 2, the broadest classification within hierarchical taxonomy 30 is searchable material 32, which encompasses all content that may be searched by a user. A typical or single phase search engine searches for content at this level, which would include all sub-collection branches shown under searchable material 32. In this embodiment, searchable material 32 is sub-divided into at least two sub-collections, including document sub-collection 34 and application sub-collection 36. For purposes of this description, only the taxonomy associated with document sub-collection 34 is described in greater detail. Document sub-collection 34 is divided into at least two sub-collections, including webpage document sub-collection 38 and PDF document sub-collection 40. Webpage document sub-collection 38 is further divided into sub-collections, one of those sub-collections being field report sub-collection 42. Likewise, pdf document sub-collection 40 is further divided into sub-collections, one of those sub-collections being material specification sub-collection 44.

Thus, when the search engine indexes a field report, it makes a series of determinations regarding where to place the field report in the hierarchical taxonomy. First, the search engine determines whether the field report should be classified as a document or application. After determining that the field report is a document, and classifying it within document sub-collection 34, the search engine determines whether the field report should be further classified as a webpage file or pdf file. After determining that a field report is a webpage file, and classifying it within webpage sub-collection 38, the search engine determines whether it can be further classified as a field report. Based on attributes of the file, such as part number 46 and wire id 48, the search engine determines that this is in fact a field report, and classifies the document within field report sub-collection 42. A similar process would be carried out for content determined to be a material specification.

Thus, each time content is crawled and indexed, the search engine classifies the content and places it in the correct location within the hierarchical taxonomy. This hierarchical indexing system is an ideal environment in which to implement a two-phased search system, because similar documents are organized in well-defined sub-collections.

As part of the indexing process, the search engine identifies keywords within content being indexed that allows the search engine to locate the content efficiently in response to a search request by a user. In the present invention, the search engine also identifies attributes that are found in all content within a sub-collection (for instance, each field report within field report sub-collection 42 includes a part number field 46). If the attribute can be defined by a regular expression, then the sub-collection can be associated with the regular expression defining the attribute. A subsequent search matching the regular expression results in the sub-collection associated with the regular expression being searched. In one embodiment, the process of identifying attributes common to content within a sub-collection is performed manually by an administrator of hierarchical taxonomy 30.

For example, field report sub-collection 42 includes attributes such as part number field 46 and wire ID field 48. Part number field 46, in this embodiment, includes a series of numbers and dashes, defined by the following regular expression: ##(dash)###(dash)##. Likewise, wire ID field 48 includes a series of numbers and dashes defined by the following regular expression: ####(dash)##. If a user enters a search term matching either the regular expression defining part number field 46 or wire ID field 46, the two-phased search system identifies field report sub-collection 42 as a sub-collection containing content particularly relevant to the search terms provided by the user.

Likewise, content organized within material specification sub-collection 44 is identifiable by the inclusion of part number field 50 and spec ID field 52. Notice that both field reports and material specifications each include a part number field (labeled 46 in field report sub-collection 42 and 50 in material specification sub-collection 44) represented by the regular expression ##(dash)###(dash)##. Spec ID 52 is represented by the regular expression #AA#(dash)####. In this embodiment, "AA" represents a series of two letters, such as "AB" or "BC". A search term entered by a user that matches the regular expressions defining either part number field 50 or spec ID field 52 results in the two-phased search system specifying material specification sub-collection 44 as a sub-collection that may contain content being searched for by the user.

Because both material specification sub-collection 44 and field report sub-collection 42 include a part number field (46 or 50, respectively), a search term matching the regular expression defining the part number field (46 and 50) results in both field report sub-collection 42 and material specification sub-collection 44 being identified as sub-collections that may include particularly relevant content.

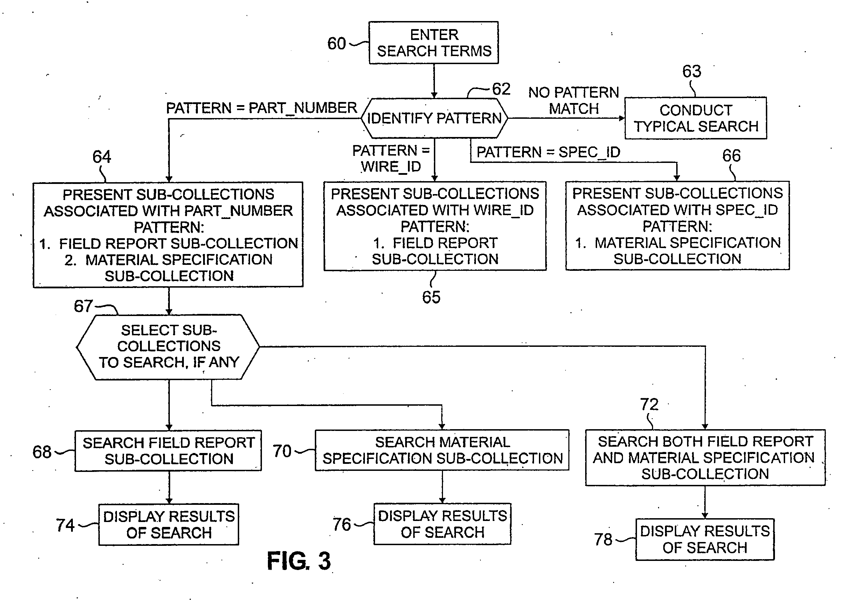

FIG. 3 is a flow chart illustrating a two-phased search implemented within the hierarchical taxonomy shown in FIG. 2. At step 60, a user provides search terms to a search engine. At step 62, the search terms are compared to regular expressions to determine if the search terms contain any recognizable patterns. If no pattern is recognized within the search terms, then a typical search of all searchable material 32 is performed at step 63.

If a pattern is recognized at step 62, then sub-collections associated with a matched pattern are presented to the user. Steps 64, 65 and 66 illustrate the sub-collections presented based on different patterns being recognized at step 62. For instance, if the regular expression match indicates that the pattern of the search term is a part number, then at step 64 the user is presented with the sub-collections including a part number field as an attribute, such as field report sub-collection 42 and material specification sub-collection 44. If the regular expression match indicates that the pattern of the search term is a wire ID, then at step 65 the user is presented with the sub-collections associated with wire ID, in this case field report sub-collection 42. If the regular expression match indicates that the pattern of the search term is a spec ID, then at step 66 the user is presented with the sub-collections associated with spec ID, in this case material specification sub-collection 42.

For the sake of simplicity, the search provided by the user at step 60 is assumed to be identified as matching a part number pattern, resulting in the user deciding at step 67 which of the associated sub-collections (including field report sub-collection 42 and material specification sub-collection 44) to search. For instance, if the user is aware that the content the user is searching for is located in field report sub-collection 42, then the user will elect to search only the field report sub-collection at step 68. Likewise, the user may elect to search only material specification sub-collection 44 at step 70, or both field report sub-collection 42 and material specification sub-collection 44 at step 72. Depending on the sub-collection(s) selected by the user to search, the results returned at steps 74, 76, or 78 will vary. For instance, if the user elects to only search field report sub-collection 42, then only content (specifically, field reports) located within field report sub-collection 42 relevant to the search terms provided will be returned to the user at step 74. The search results returned by the above method provide the user with more focused and relevant results than a typical search performed over an entire collection.

In another embodiment, sub-collections associated with a matched pattern are automatically searched without selection input from a user at step 67. For example, as shown in FIG. 3, if a search term matches a pattern associated with a part number then field report sub-collection 42 and material specification sub-collection 44 would be automatically searched, with results being provided to the user. Likewise, if a search term matches a pattern associated with a wire ID then field report sub-collection 42 would be automatically searched, with results being provided to the user.

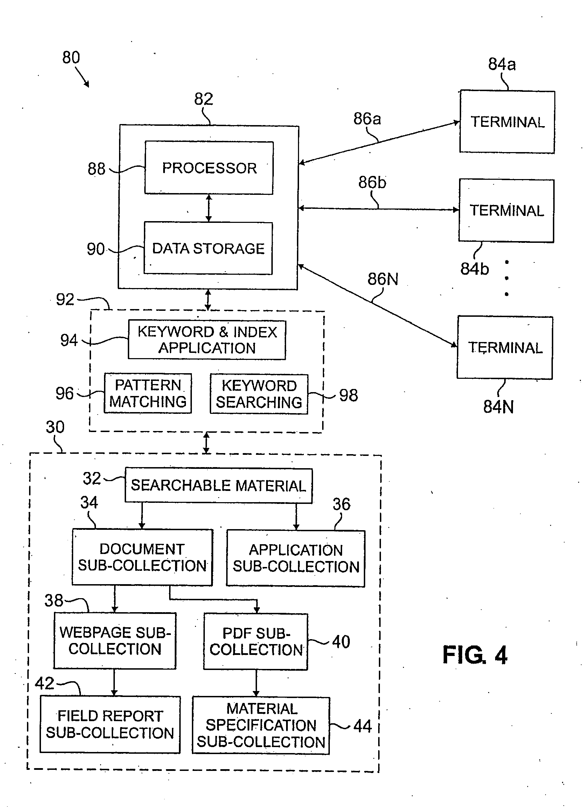

FIG. 4 is a functional block diagram illustrating system 80 for implementing two-phased searching. System 80 includes server 82 and terminals 84a, 84b ... 84N (collectively "terminals 84"). Each terminal 84 communicates with server 82 along bi-directional communication channels 86a, 86b ... 86N (collectively "bi-directional communication channels 86), respectively. Server 82 includes computer processor 88 and data storage device 90. Data storage device 90 will typically comprise one or more storage devices such as magnetic or optical discs, which may be co-located, or distributed, e.g. over a network. Computer processor 88 and data storage device 90 implement two-phased search application 92, which includes a number of individual sub-programs or applications such as crawling and indexing application 94, pattern match application 96, and keyword search application 98.

Crawling and indexing application 94 indexes all searchable content. In one embodiment, crawling and indexing application 94 generates hierarchical taxonomy 30 (discussed in detail with respect to FIG. 2) during the indexing process, which is stored within data storage device 90. Hierarchical taxonomy 30 includes searchable material 32, document sub-collection 34, application sub-collection 36, webpage sub-collection 38, pdf sub-collection 40, field report sub-collection 42 and webpage sub-collection 44. Crawling and indexing application 94 may also recognize attributes associated with particular sub-collections (e.g., part_number field 46 as shown in FIG. 2). In other embodiments, an administrator of the hierarchical taxonomy recognizes attributes common to documents organized as a sub-collection, and defines regular expressions to determine if search terms match a defined pattern associated with a particular sub-collection. In one embodiment, regular expressions are stored within data storage device 90.

A user located at one of the terminals 84 provides search terms to server 82. During the first phase of a search, pattern matching application 96 uses regular expressions to determine whether any of the search terms provided by the user match defined patterns. If a search term does match a defined pattern, then selected sub-collections are searched using keyword search application 98. In other embodiments, if a search term matches a defined pattern, the associated sub-collections are presented to the user located at one of the terminals 84, allowing the user to determine which, if any, of the associated sub-collections to search.

Depending on the sub-collections selected by the user or automatically selected, keyword search application 98 uses the hierarchical taxonomy (shown in FIG. 2) to find content relevant to the search terms provided by the user. The relevant content is presented to the user along bi-directional communication channels 86.

Although the present invention has been described with reference to preferred embodiments, workers skilled in the art will recognize that changes may be made in form and detail without departing from the scope of the invention, which is defined by the claims.

## Claims

1. A method of providing search results, the method comprising:
receiving search terms from a user (12);
recognizing patterns within the search terms received from the user (14);
selecting one or more sub-collection within an entire collection to search based on the patterns recognized within the search terms (20);
searching the selected sub-collection(s) based on the search terms provided by the user (22); and
providing the user with relevant content located within the selected sub-collection(s) (24).

2. The method of claim 1, wherein recognizing patterns within the search terms includes:
comparing the search terms with regular expressions adapted to recognize specific patterns associated with particular sub-collections.

3. The method of claim 1 or 2, wherein selecting sub-collections to search includes:
indicating to the user the sub-collections associated with the patterns recognized within the search terms (64-66); and
receiving input from the user regarding the sub-collections to be searched (67).

4. The method of claim 1 or 2, wherein selecting sub-collections to search includes:
automatically selecting all sub-collections associated with patterns recognized within the search terms.

5. The method of any preceding claim, further including:
searching the entire collection based on the search terms provided by the user when no pattern is recognized within the search terms (16).

6. The method of claim 5, further comprising:
providing the user with relevant content based on a search performed on the entire collection using the search terms provided by the user (18).

7. The method of any preceding claim, wherein providing the user with relevant content located within the selected sub-collection includes:
ranking the relevant content based on relevancy of the content to the search terms provided by the user.

8. A computer system (80) for providing two-phased searching, the system comprising:
a processor (88); and
a data storage device (90), wherein the processor and the data storage device organize searchable content into sub-collections using an application (92) comprising a two-phase search engine application, wherein the two-phase search engine application selects the sub-collections to search based on patterns recognized in the search terms (96), and wherein the two-phase search engine application performs a relevancy search of the selected sub-collections based on the search terms provided by the user (98).

9. The computer system of claim 8 further including:
a plurality of terminals (84a-N) connected to the computer system such that users located at the terminals can provide search terms to the computer system to initiate a two-phased search of searchable content.

10. The system of claim 8 or 9, wherein the two-phased search engine application includes:
an indexing application (94) that organizes the searchable content in a hierarchical taxonomy that is stored in the data storage device.

11. The system of claim 8, 9 or 10 wherein the data storage device stores regular expressions that define patterns associated with selected sub-collections.

12. The system of claim 11, wherein the two-phased search engine application includes:
a pattern matching application (96) that uses the regular expressions stored in the data storage device to recognize patterns in the search terms provided by the user, wherein sub-collections are selected for searching based on the patterns recognized in the search terms.

13. A method of implementing a two-phased search system, the method comprising:
organizing searchable content into a plurality of sub-collections, wherein content within each of the plurality of sub-collections shares common attributes;
identifying patterns associated with each of the plurality of sub-collections;
determining whether search terms provided by a user include any of the identified patterns associated with one of the plurality of sub-collections (14);
selecting the sub-collection(s) to search based on the patterns identified within the search terms (20); and
searching the selected sub-collection(s) based on the search terms provided by the user (22).

14. The method of claim 13, wherein identifying patterns associated with each of the plurality of sub-collections includes:
defining regular expressions based on the identified patterns associated with each of the plurality of sub-collections.

15. The method of claim 14, wherein determining whether search terms provided by a user include any of the identified patterns associated with one of the plurality of sub-collections includes:
comparing the defined regular expressions to the search terms provided by the user.

16. The method of claim 13, 14 or 15 wherein selecting the sub-collection(s) to search based on the patterns identified within the search terms includes:
indicating to the user the sub-collection(s) associated with patterns identified in the search terms (64-66); and
receiving input from the user regarding the sub-collection(s) to search (67).

17. The method of claim 13, 14 or 15 wherein selecting the sub-collection(s) to search based on the patterns identified within the search terms includes:
automatically selecting the sub-collection(s) associated with patterns identified in the search terms.
